# EUROPÄISCHE PATENTANMELDUNG

(11) **EP 1 265 409 A1**
(43) Veröffentlichungstag der Anmeldung: **11.12.2002**
(21) Anmeldenummer: 01440155.8
(22) Anmeldetag: 05.06.2001
(51) Int. Cl.: H04L 25/06

(54) **Entscheiderschaltung mit multiplexierten XOR-Schaltungen**

(71) Anmelder: ALCATEL, 75008 Paris (FR)
(72) Erfinder: Lach, Dr. Eugen, 71672 Marbach (DE)
(74) Vertreter: Rausch, Gabriele, Dr.

(57) **Zusammenfassung**

Es wird eine Entscheiderschaltung für hohe Datenraten mit Schwellwertentscheidern, auf die der Datenstrom der eingehenden Signale aufgeteilt wird sowie einer Demultiplexer-Stufe und EXOR-Entscheiderschaltungen vorgeschlagen. Des weiteren ist der Aufbau eines Augenmonitors und eines Pseudo-Error-Monitors unter Verwendung der Schaltung möglich. Ein Übertragungssystem unter Verwendung von Sendern sowie von Empfängern mit der erfindungsgemäßen Entscheiderschaltung wird diskutiert.

## Beschreibung

Die Erfindung geht aus von einer Entscheiderschaltung für hohe Datenraten mit wenigstens zwei Schwellwertentscheidern, auf die der Datenstrom der eingehenden Signale aufgeteilt wird und wobei die entschiedenen Signale aus den Schwellwertentscheidern jeweils einen Demultiplexer und jeweils eine EXOR-Schaltung zugeführt werden. Weiterhin geht die Erfindung aus von einem Augenmonitor und einem Pseudo-Error-Monitor unter Verwendung der Entscheiderschaltung. Weiterhin geht die Erfindung aus von einem System zum Übertragen von optischen Daten mit Sendern, einer Übertragungsstrecke und Empfängern, wobei in den Empfängern eine Entscheiderschaltung für hohe Datenraten implementiert ist.

### Hintergrund der Erfindung:

Neben der Dämpfung ist die Signaldispersion der optischen Signale das hauptsächlich limitierende Kriterium, das Übertragungsstrecken und Bitraten in faseroptischen Systemen beeinflusst. Die Effekte der Dispersion und ihre Limitierungen können durch geeignete Signalverarbeitung des optischen und des rückgewonnenen elektrischen Signals ausgeglichen werden. Im praktischen Einsatz ist es dabei notwendig, die Signalverarbeitung adaptive zu gestalten, da die Dispersionseffekte der Faser sich mit der Zeit ändern. Durch die Dispersionseffekte, beispielsweise hervorgerufen durch Polarisationsmodendispersion, treten Überlappungen von Signalanteilen unterschiedlicher Polarisation auf. Die Signale werden aufgrund dieser Dispersionseffekte zeitlich verschmiert und kommen unaufgelöst im optischen Empfänger an. Um die Signale, die aufgrund von Dispersionseffekte überlagert im Empfänger ankommen, wieder zu treten, werden nichtlineare elektronische Filter zur Entzerrung der Signale eingesetzt. Aus der Veröffentlichung "Adaptive non-linear cancellation for high speed fiber optic systems" Jack Winters und S. Kasturia, Journal of Lightwave Technology, Vol. 10, Nr. 9, Seite 971 ff ist ein nichtlineares elektronisches Filter bekannt. Um die zeitlichen Probleme im nichtlinearen Filter zu verkleinern, werden zwei Schwellwertentscheider mit unterschiedlichen Schwellwerten parallel zu einander geschaltet. Die Ergebnisse der parallel geschalteten Schwellwertentscheider werden über ein ansteuerbaren Multiplexer zusammengeführt. Dieser Multiplexer arbeitet als EXOR-Schaltung für die eingehenden Signale. Über ein D-Flip-Flop und eine Rückkoppelschleife ist der Multiplexer des Filters beschaltet. Eine periphere Elektronik ermittelt die einzustellenden Schwellwerte und speichert sie über Kondensatoren ab. Die Zeitkonstanten der Elektronik liegen somit fest. Mit einem solchen nichtlinearen Filter lassen sich Signale entzerren, wenn die Verzögerungen zwischen langsamen und schnellen Signalanteilen sich innerhalb eines Datentakts bewegen. Ein Problem bleibt bei dem bisher beschriebenen Schaltungen bestehen. Die Parameterzurückkoppelung in der Rückkoppelschleife des elektronischen Filters werden nur indirekt gewonnen.

Eine direkte Messung der Qualität eines Übertragungskanals bei einer digitalen Übertragung erfolgt mit Hilfe eines Augendiagramms. Das Augendiagramm ist ein hervorragendes Hilfsmittel, um Fehler in den Hardware-Komponenten eines Übertragungssystems zu bestimmen und qualitative Aussagen über die Leistung des Systems zu treffen. Für die Messung des Augendiagramms wird ein eines Oszilloskop mit einem externen Trigger, der mit den Datensignalen korreliert ist. Das empfangene und in der Photodiode gewandelte elektrische Signale wird auf den Y-Eingang gegeben. Bei einer horizontalen Zeitbasis von etwa 4 Bit-Perioden wird durch das Speichervermögen des Oszilloskops die Überlagerung der Bit des Signals dargestellt. Durch Störungen auf den Übertragungsweg kann sich das so dargestellte Auge schließen und je geringer die Augenöffnung ist, um so schwieriger lassen sich die beiden binären Zustände des Signals unterscheiden. Eine direkte Messung der Augenöffnung ist daher zur Optimierung des Übertragungskanals von großer Bedeutung. Aus der nichtveröffentlichten Anmeldung DE 100 52 279.3 ist der Aufbau eines schnellen integrierten Augenmonitors bekannt. Mit dieser Schaltung ist es möglich, Augendiagramme sowie Pseudo-Errors auch bei hohen Datenraten zu messen. Das Filter im Empfänger wird mit dem Ergebnis der Daten des Augenmonitors und des Pseude-Error-Monitors angesteuert.

Probleme bereiten allerdings schon die Entscheidungen der Daten im elektronischen Filter. Bei hohen Datenrgten - wir sprechen dabei von Datenraten ab 40 Gbit/s - können die elektronischen Schaltungen den Taktraten nur noch schwer folgen. Aus diesem Grund wird im Stand der Technik schon der eingehende Datenstrom auf mehrere Entscheiderschaltungen aufgeteilt. Dadurch reduziert sich die Taktrate, in der jeder einzelne Entscheider arbeitet, um den Faktor, in dem der Datenstrom aufgeteilt ist. Probleme bereitet allerdings die EXOR-Schaltung, die die Datenströme wieder bei den hohen Datentakt verarbeiten muss.

### Beschreibung der Erfindung:

Gegenstand der Erfindung ist daher eine Schaltung, die es ermöglicht, die EXOR-Schaltung zu entlasten und auch noch bei hohen Datenraten mit einer einfachen Schaltungs- und Entscheiderstrukturen zu arbeiten. Dies wird durch eine weitere parallelisierende Stufe in der Schaltung erreicht. Durch Einsatz einer zusätzlichen Demultiplexer-Stufe wird der Signalstrom weiter parallel verarbeitet und die EXOR-Schaltungen werden bei Taktraten, die um den Faktor der Parallelisierungen reduziert sind, betrieben.

Ein Ausführungsbeispiel der Erfindung sind in Zeichnungen dargestellt und in der nachfolgenden Beschreibung näher erläutert.

Es zeigt:
- Fig. 1: eine Schaltung im Stand der Technik,
- Fig. 2: eine erfindungsgemäße Entscheiderschaltung
- Fig. 3: beispielhaftes ETDM Übertragungssystem

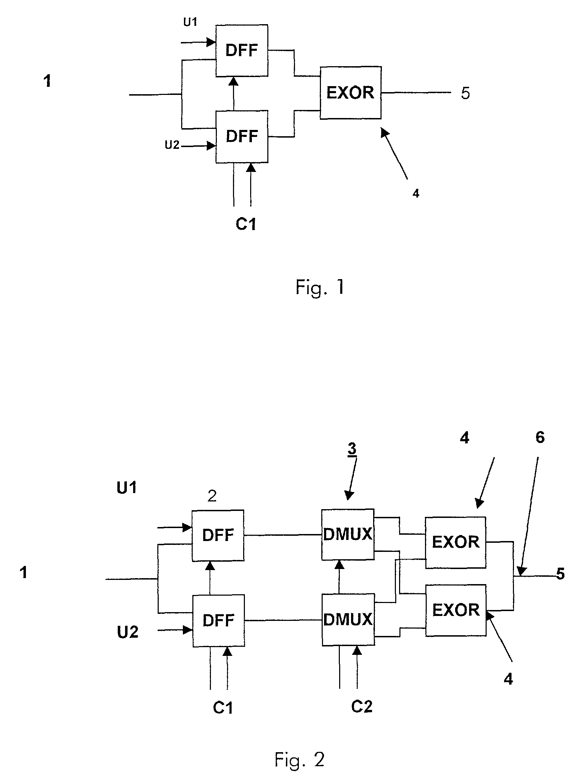

Fig. 1 stellt die bereits im Stand der Technik beschriebene Entscheiderschaltung dar. Ein eingehender Datenstrom 1 wird auf zwei Schwellwertentscheider 2 aufgeteilt. Die Schwellwertentscheider werden mit unterschiedlichen Schwellwerten U1 und U2 angesteuert. Die Taktfrequenz für die parallel geschalteten Schwellwertentscheider 2 ist C1, wobei C1 die Taktrate des Eingangssignals 1 oder ganzzahlige Bruchteile davon darstellt. Die Ergebnisse der Schwellwertentscheider werden einer EXOR-Schaltung 4 zugeführt. Die EXOR-Schaltung arbeitet wiederum beim Datentakt der eingehenden Daten 1. Der Ausgang der EXOR-Schaltung kann an einen Augenmonitor, an einen Pseudo-Error-Monitor sowie an weitere Verarbeitungsmittel angeschlossen sein. Als Beispiel ist ein Eingangssignal von 40 Gbit/s gewählt. Die beiden parallel betriebenen Schwellwertentscheider 2 werden mit einer Taktfrequenz von 40 GHz oder 20 GHz betrieben. Die EXOR-Schaltung, in der die Signale wieder kombiniert werden, arbeitet daher bei 40 Gbit oder 20 Gbit/s. Dieses Beispiel zeigt, dass eine Schaltung - wie im Stand der Technik bekannt - nicht zur Bearbeitung hoher Datenraten möglich ist. Bis zum heutigen Zeitpunkt existieren keine EXOR-Schaltungen, die mit 40 Gbit/s direkt betrieben werden können. Daher ist mit einem solchen Entscheideraufbau kein direktes Augenmonitoring möglich.

Die Lösung wird in Fig. 2 dargestellt. Das eingehende Datensignal 1 wird wiederum auf zwei Schwellwertentscheider 2 verteilt. Die Schwellwertentscheider 2 werden wiederum mit unterschiedlichen Schwellwerten U1 und U2 eingestellt. Die beiden Schwellwertentscheider werden mit einem ersten Taktsignal C1 betrieben. Die Ausgänge der Schwellwertentscheider 2 sind mit den Eingängen von Demultiplexern 3 jeweils verbunden. Hier liegen die entschiedenen Signale 1a an. Die Demultiplexer 3 werden mit einer Taktfrequenz C2 betrieben. Die Ausgänge der Demultiplexer sind mit Eingängen von EXOR-Schaltungen verbunden. Hier stehen die demultiplexten Signale 1b zur Verfügung. Dabei stehen die Ausgänge eines Demultiplexers jeweils mit Eingängen zweier EXOR-Schaltungen in Verbindung. Die Ausgänge der EXOR-Schaltungen 4 werden kombiniert 6 und ergeben das gewünschte entschiedene und korrigierte Signal 5 für das Augendiagramm. Durch den Einbau der zusätzlichen Demultiplexer-Stufe ist die Realisierung eines Augenmonitors bei hohen Datenraten unter Verwendung konventioneller elektronischer Komponenten wie einer normalen EXOR-Schaltung möglich. Die zusätzliche Demultiplexer-Stufe addiert dabei keine zusätzlichen Bitfehler.

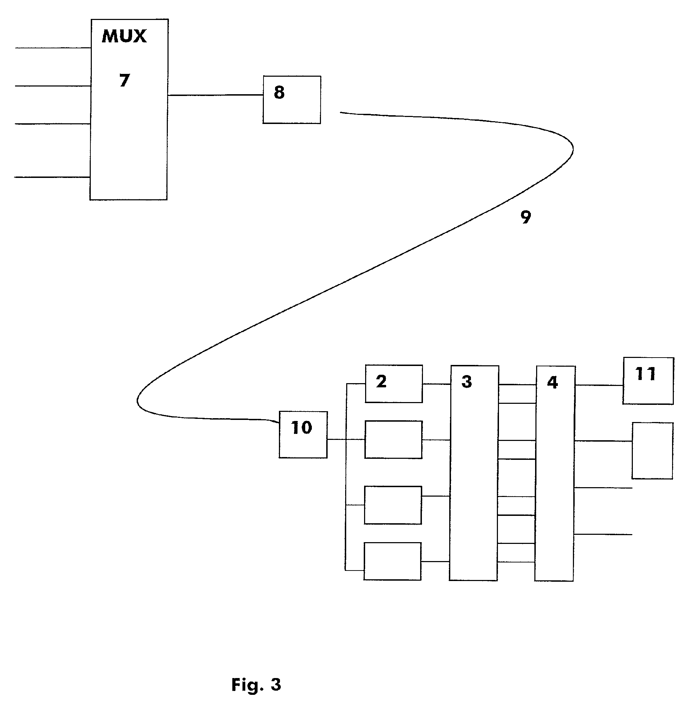

Fig. 3 zeigt ein beispielhaftes Übertragungssystem. In diesem Übertragungssystem werden die Daten auf der Basis eines TDM (Time Division Multiplex) kombiniert. Dies erfolgt in einem Multiplexer senderseitig. Fig. 3 zeigt schematisch auf der Senderseite einen Multiplexer 7 mit mehreren Eingängen und einem Ausgang, der mit einem elektrooptischen Wandler 8 verbunden ist. Der Ausgang dieses elektrooptischen Wandlers 8 ist mit einer Übertragungsstrecke 9 verbunden. Auf der Empfängerseite ist zunächst schematisch ein optoelektronischer Wandler 10 dargestellt. Der Ausgang dieses optoelektronischen Wandlers 10 wird auf die Schwellwertentscheider 2 aufgeteilt. Die Ausgänge der Schwellwertentscheider 2 liegen an der Demultiplexer-Stufe 3 an. In dieser Darstellung wurde eine Demultiplexer-Stufe schematisch in einem funktionellen Block dargestellt. Die Ausgänge der Demultiplexer-Stufe 3 liegen an den Eingängen der EXOR-Schaltung 4, ebenfalls schematisch als ein Block dargestellt, an. Die Ausgänge der EXOR-Schaltung liegen an einzelnen Monitoren 11 an. Mit einer solchen, hier schematisch dargestellten, Schaltung ist es möglich, ein -TDM-Übertragungssystem genau zu kontrollieren. Es ist möglich, die Beiträge die einzelne Kanäle im Multiplexer des Senders beitragen senderseitig zu analysieren. Gerade in TDM-Übertragungssysteme werden die einzelnen Datensignale, die im Multiplexer 7 kombiniert werden, von unterschiedlichen Quellen zusammengetragen. Dabei unterliegen diese Datenquellen unterschiedlichen Modulationsbedingungen. Dadurch sind auch die Parameter für die Übertragung über ein optische Übertragungsstrecke von vornherein unterschiedlich. Empfängerseitig stellt die erfindungsgemäße Schaltung mit dem erfindungsgemäßen Empfänger eine Möglichkeit dar, die einzelnen Kanäle des TDM-Multiplex zu beobachten und die Parameter für die Filterung nachzuhalten. Es wird durch die erfindungsgemäße Schaltung nicht nur eine Überwachung des Gesamtsystems möglich, sondern eine Überwachung von fein granulierten Kanalparametern.

## Patentansprüche

1. Entscheiderschaltung für hohe Datenraten mit wenigstens zwei Schwellwertentscheidern (2) auf die der Datenstrom der eingehenden Signale (1) aufgeteilt wird, wobei die Schwellwertentscheidern (2) jeweils mindestens mit einem Demultiplexer (3) verbunden sind und die Demultiplexern mit EXOR Schaltungen (4) verbunden sind

2. Entscheiderschaltung nach Anspruch 1 wobei die Schwellwertentscheider mit einem ersten Taktsignale (C1) und die Demultiplexer (3) mit einem zweiten Taktsignal (C2) getaktet sind und C2< C1 ist.

3. Augenmonitor unter Verwendung der Schaltung nach Anspruch 1 wobei die Signalausgänge der EXOR-Schaltung mit mindestens einem Monitoreingang verbunden sind.

4. Pseudoerror-Monitor unter Verwendung der Schaltung nach Anspruch 1 wobei die Signalausgänge der EXOR-Schaltung mit mindestens einem Pseudoerror- Monitoreingang verbunden sind.

5. Empfänger für optisch übertragene Datensignale unter Verwendung der Schaltung nach Anspruch 1.

6. System zum Übertragen von optischen Daten mit wenigstens einem Sender, einer Übertragungsstrecke und einem Empfänger, wobei wenigstens einer der Empfänger eine Schaltung nach Anspruch 1 enthält.

7. System nach Anspruch 6 **dadurch gekennzeichnet, dass** die Übertragung der Daten auf der Basis eines TDM erfolgt.
